# EUROPÄISCHE PATENTANMELDUNG

(11) **EP 3 159 553 A1**
(43) Veröffentlichungstag der Anmeldung: **26.04.2017**
(21) Anmeldenummer: 15002974.2
(22) Anmeldetag: 20.10.2015
(51) Int. Cl.: F16B 11/00

(54) **KOMBINATIONSKLEBUNG BESTEHEND AUS EINER DAUERHAFT TRAGENDEN KLEBUNG UND EINER TEMPORÄREN KLEBUNG ZUR ERLEICHTERUNG UND BESCHLEUNIGUNG DER FERTIGUNG**

(71) Anmelder: Linde Aktiengesellschaft, 80331 München (DE)
(72) Erfinder: Schönberger, Manfred, 83342 Tacherting (DE); Lindner, Michael, 83278 Traunstein (DE)
(74) Vertreter: Meilinger, Claudia Sabine

(57) **Zusammenfassung**

Die Erfindung betrifft ein Verfahren zum Verkleben eines ersten Bauteils (10) mit einem zweiten Bauteil (20), wobei die beiden Bauteile (10, 20) zum Vorfixieren mit einem ersten Klebstoff (K) unter Ausbildung einer ersten Klebeverbindung (31) verklebt werden, und wobei die beiden Bauteile (10, 20) zur Herstellung einer elastischen zweiten Klebeverbindung (32) mit einem zweiten Klebstoff (K') verklebt werden, und wobei die erste Klebeverbindung (31) nach dem Aushärten der zweiten Klebeverbindung (32) derart belastet wird, dass sie zerstört wird, so dass die zweite Klebeverbindung (32) ungehindert von der ersten Klebeverbindung (31) elastisch verformbar ist. Weiterhin betrifft die Erfindung einer solchermaßen hergestellte Baugruppe (1).

## Beschreibung

Die Erfindung betrifft ein Verfahren zum Verkleben zweiter Bauteile sowie eine Baugruppe, die durch das Verfahren hergestellt wird.

Das Kleben erfährt seit Jahren einen massiven Aufschwung und ist zunehmend im Begriff, herkömmliche Fügeverfahren wie Schweißen oder Nieten zu ersetzen.

Sind Klebeverbindungen dynamischen Belastungen ausgesetzt, so ist der Einsatz von elastisch verformbaren Klebstoffverbindungen anzuraten. Diese benötigen allerdings allesamt mehr oder weniger lang zum Erreichen der Endfestigkeit.

Dieser Umstand verzögert jedoch die Fertigung bzw. reduziert den Durchsatz.

Hiervon ausgehend liegt der vorliegenden Erfindung die Aufgabe zugrunde, ein Verfahren zum Verkleben zweier Bauteile bereitzustellen, das der vorgenannten Problematik entgegenwirkt.

Diese Aufgabe wird durch ein Verfahren mit den Merkmalen des Anspruchs 1 gelöst.

Danach ist gemäß Anspruch 1 ein Verfahren zum Verkleben eines ersten Bauteils mit einem zweiten Bauteil vorgesehen, wobei die beiden Bauteile zum Vorfixieren, d.h., Herstellen einer temporären Fixierung, mit einem ersten Klebstoff unter Ausbildung einer ersten Klebeverbindung verklebt werden, und wobei die beiden Bauteile zur Herstellung einer dauerhaften, elastischen zweiten Klebeverbindung mit einem zweiten Klebstoff verklebt werden, und wobei die erste Klebeverbindung nach dem Aushärten der zweiten Klebeverbindung derart belastet wird, dass sie zerstört wird, so dass die zweite Klebeverbindung ungehindert von der ersten Klebeverbindung elastisch verformbar ist.

Gemäß einer Ausführungsform der Erfindung kann es sich bei der Belastung bevorzugt um eine mechanische Belastung handeln, bei der eine mechanische Kraft in die zweite Klebeverbindung eingeleitet wird, um diese zu zerstören. Gemäß einer weiteren Ausführungsformen der Erfindung kann die erste Klebeverbindung jedoch auch chemisch zerstört werden, insbesondere durch Kontaktieren der ersten Klebeverbindung mit einem geeigneten Stoff bzw. Chemikalie, der bzw. die die erste Klebeverbindung zerstört bzw. auflöst. Weiterhin kann die erste Klebeverbindung gemäß einer weiteren Ausführungsform auch thermisch belastet und dabei zerstört werden, indem die erste Klebeverbindung erhitzt wird. Schließlich kann eine beliebige Kombination der vorstehend beschriebenen Belastungen der ersten Klebeverbindung angewendet werden, die zur Zerstörung der ersten Klebeverbindung führt.

Das Aushärten der zweiten Klebeverbindung bedeutet hierbei vorzugsweise, dass die zweite Klebeverbindung eine Festigkeit erreicht hat, die bei einem bestimmungsgemäßen Verwenden der verklebten Bauteile garantiert, dass die zweite Klebeverbindung nicht zerstört wird. Der ausgehärtete Zustand der zweiten Klebeverbindung kann dabei auch schon zu einem Zeitpunkt vorhanden sein, zu dem noch nicht die maximale Endfestigkeit der zweiten Klebeverbindung erreicht ist.

Durch das kombinierte Verkleben mit einem ersten Klebstoff (z.B. Cyanacrylatklebstoff, siehe unten) und einem elastischen zweiten Klebstoff (z.B. PUR-Klebstoff, siehe unten) soll erfindungsgemäß die Fertigung der Klebeverbindung erleichtert und beschleunigt werden. Dabei dient der rasch abbindende erste Klebstoff der schnellen Fixierung der zu verklebenden Bauteile. Später auftretende dynamische Belastungen können vom ersten Klebstoff (z.B. Cyanacrylatklebstoff) nur bedingt aufgenommen werden. So kommt es zum gezielten Versagen der erste Klebeverbindung (z.B. Cyanacrylatklebschicht). Dadurch kann die Verklebung, nämlich die zweite Klebeverbindung, nun elastisch verformt werden, ohne dass diese behindert wird. Der erste Klebstoff hat demnach nur eine temporäre Funktion während der Fertigung und soll später unter Belastung versagen.

Gemäß einer bevorzugten Ausführungsform der Erfindung werden entsprechend die beiden Klebstoffe so gewählt, dass die erste Klebeverbindung eine kürzere Aushärtezeit aufweist, als die zweite Klebeverbindung. Bezüglich der zweiten Klebeverbindung ist die Aushärtezeit vorzugsweise diejenige Zeit, während der die zweite Klebeverbindung die oben dargelegte, hinreichende Festigkeit erreicht hat. Bezüglich des ersten Klebers bezeichnet die Aushärtezeit vorzugsweise diejenige Zeit, die der erste Kleber bzw. die erste Klebeverbindung zum Erreichen von zumindest 90%, vorzugsweise zumindest 95%, vorzugsweise 100% der Endfestigkeit benötigt.

Gemäß einer weiteren Ausführungsform der Erfindung werden zunächst der erste und der zweite Klebstoff jeweils auf das erste und/oder das zweite Bauelement aufgetragen und sodann werden die beiden Bauteile in ihre bestimmungsgemäße Lage zueinander gebracht, die zumindest während der Aushärtung der ersten Klebeverbindung beibehalten wird.

Weiterhin ist gemäß einer bevorzugten Ausführungsform der Erfindung vorgesehen, dass die beiden Bauteile nach dem Aushärten der ersten Klebeverbindung bzw. nach dem Ablaufen der Aushärtezeit der ersten Klebeverbindung sowie vor dem Aushärten der zweiten Klebeverbindung (also vor Ablauf der Aushärtezeit der zweiten Klebeverbindung) gemeinsam bewegt werden (insbesondere so, dass ihre relative Lage zueinander nicht verändert wird) und/oder mit zumindest einem weiteren Bauteil verbunden werden, so dass insbesondere während eines Produktionsprozesses Zeit gespart werden kann, da nicht erst das Aushärten der zweiten Klebeverbindung abgewartet werden muss.

Gemäß einer bevorzugten Ausführungsform der Erfindung ist vorgesehen, dass der erste Klebstoff Cyanacrylat aufweist.

Es handelt sich hierbei um Ester der Cyanoacrylsäure (z.B. 2-Cyanacrylsäuremethylester, n-Butylcyanacrylat und 2-Octylcyanacrylat). Ein solcher (insbesondere einkomponentiger) cyanacrylathaltiger Klebstoff kann in Form von Monomeren vorliegen, die durch Polymerisationsreaktion im Fügespalt zwischen den beiden Bauteilen zum eigentlichen Klebstoffpolymer reagieren. Die Polymerisation, die zur Aushärtung führt, wird durch polarer Gruppen oder Teilchen bedingt, beispielsweise die OH-Ionen in der Feuchtigkeitsschicht an den zu verklebenden Bauteiloberflächen, was als anionische Polymerisation bekannt ist.

Gemäß einer weiteren bevorzugten Ausführungsform der Erfindung ist vorgesehen, dass der zweite Klebstoff PUR (also Polyurethan) aufweist.

Derartige Polyurethan-Klebstoffe können grundsätzlich als Ein- oder Zweikomponenten-Klebstoffe vorliegen, welche durch Polyaddition aushärten können. Gemäß einer Ausführungsform der Erfindung wird ein Einkomponenten-PUR-Klebstoff verwendet, der z.B. durch Zugabe von Luftfeuchtigkeit und/oder Wärme aushärtet.

In einem im Rahmen der Erfindung verwendbaren PUR-Klebstoff kann weiterhin einer der folgenden Stoffe enthalten sein: Diphenylmethan-4,4'-diisocyanat (MDI), Isophorondiisocyanat (IPDI), Toluylendiisocyanat (TDI), Hexamethylendiisocyanat (HDI).

Gemäß einer Ausführungsform der Erfindung ist vorgesehen, dass die erste Klebeverbindung bzw. der erste Kleber eine Aushärtezeit im Bereich von wenigen Sekunden bis wenigen Stunden aufweist, z.B. im Bereich von 1 Sekunde bis 3 Stunden.

Weiterhin ist gemäß einer Ausführungsform der Erfindung vorgesehen, dass die zweite Klebeverbindung bzw. der zweite Kleber eine Aushärtezeit im Bereich von wenigen Stunden bis einigen Tagen aufweist, z.B. im Bereich von 3 Stunden bis 7 Tage.

Weiterhin ist gemäß einer bevorzugten Ausführungsform der Erfindung vorgesehen, dass die zweite Klebeverbindung im ausgehärteten Zustand ein Elastizitätsmodul unterhalb von 1000MPa, vorzugsweise unterhalb von 100MPa, besonders bevorzugt unterhalb von 15 MPa aufweist.

Vorzugsweise ist der Elastizitätsmodul der zweiten Klebeverbindung niedriger als der Elastizitätsmodul der ersten Klebeverbindung

Das erfindungsgemäße Verfahren wird besonders bevorzugt bei ersten (oder zweiten) Bauteilen verwendet, die ein Metall aufweisen oder daraus bestehen und/oder bei zweiten (oder ersten) Bauteilen, die einen Kunststoff aufweisen oder aus einem Kunststoff bestehen.

Gemäß einem weiteren Aspekt der Erfindung wird eine Baugruppe offenbart, die zumindest ein erstes Bauteil sowie ein zweites Bauteil aufweist, wobei die beiden Bauteile mittels eines Verfahrens nach einem der vorhergehenden Ansprüche miteinander verbunden sind.

Hierbei kann das erste (oder zweite) Bauteil aus einem Metall bestehen oder ein Metall aufweisen, während das zweite (oder erste) Bauteil aus einem Kunststoff besteht oder einen Kunststoff aufweist.

Vorzugsweise handelt es sich bei dem ersten oder dem zweiten Bauteil um eines der folgenden Bauteile: einen Schwingungsdämpfer oder eine Komponente hiervon, eine Montagehilfe (z.B. bei Bauteilen mit Wärmeausdehnung), einen Wärmeübertrager (z.B. einen gewickelten oder einen Plattenwärmeübertrager), eine Komponente eines Wärmeübertragers (z.B. eines gewickelten oder eines Plattenwärmeübertragers), ein Fahrzeug, insbesondere Kraftfahrzeug, eine Komponente eines Fahrzeuges, insbesondere eines Kraftfahrzeuges, ein Flugzeug, eine Komponente eines Flugzeugs, eine Abdichtung.

Insbesondere können mit dem erfindungsgemäßen Verfahren Strukturverklebungen im Kraftfahrzeugbereich bzw. zwischen Kraftfahrzeugbauteilen hergestellt werden.

Bei dem erfindungsgemäßen Verfahren handelt es sich insbesondere um eine vorteilhafte Vorgehensweise bzw. technische Lehre, die es ermöglicht, Montagezeiten zu minimieren, da bisher z.B. entweder Nieten oder Schrauben zusätzlich zur Klebeverbindung eingesetzt werden, um den "Schnellen Halt" zu gewährleisten oder lange Aushärtezeiten (zum Teil auch mit Wärmebehandlung) eingesetzt werden.

Ein Vorteil der vorliegenden Erfindung liegt insbesondere darin, dass elastische Klebungen genau eingestellt werden können, da kein Zeitdruck mehr vorhanden ist.

Das erfindungsgemäße Verfahren lässt sich auf nahezu alle Verklebungen anwenden, wo bereits heute geklebt wird. Von der Autoscheibe über den Flugzeugbau bis zur Schwingungsdämpfung und Wärmeübertragerbau.

Der E-Modul des zweiten Klebstoffes ist vorzugsweise einstellbar, und zwar je nach Anwendung. Z.B. wird vorzugsweise ein geringer E-Modul bei der Schwingungsdämpfung verwendet, wohingegen bei Festigkeitsklebungen der E-Modul vorzugsweise so eingestellt wird, dass er möglichst identisch mit dem E-Modul der zu verklebenden Bauteile/Materialien ist.

Weiterhin wird z.B. bei Wärmeübertragern ein zweiter Klebstoff verwendet, der im Arbeits- bzw. Temperaturbereich des Wärmeübertragers den gleichen oder einen ähnlichen Wärmeausdehnungskoeffizienten aufweist, wie die zu verklebenden Bauteile des Wärmeübertragers.

Die Bruchdehnung beim ersten Kleber soll bei mechanischer Zerstörung natürlich möglichst gering sein.

Die Festigkeiten der Klebeverbindungen werden vorzugsweise über die Klebeflächen eingestellt.

Weitere Merkmale und Vorteile der Erfindung sollen bei den nachfolgenden Figurenbeschreibungen von Ausführungsbeispielen der Erfindung anhand der Figuren erläutert werden. Es zeigen:
- Fig. 1 bis Fig. 3: schematische Schnittansichten einer erfindungsgemäß vorgenommenen Klebeverbindung zwischen einem ersten und einem zweiten Bauteil.

Die Figur 1 zeigt im Zusammenhang mit den Figuren 2 und 3 ein Verfahren zum Herstellen einer Verbindung zwischen zwei Bauteilen 10, 20 durch Kleben.

Hierbei werden die beiden Bauteile 10, 20 zum Vorfixieren der beiden Bauteile aneinander mit einem ersten Klebstoff K unter Ausbildung einer ersten Klebeverbindung 31 miteinander verklebt.

Weiterhin wird zwischen den beiden Bauteile 10, 20 eine zweite Klebeverbindung 32 geschaffen, die später einer elastisch verformbare Verbindung zwischen den beiden Bauteilen 10, 20 bereitstellen soll.

Da diese zweite Klebeverbindung 32 jedoch eine längere Aushärtezeit benötigt, wird mit der vorfixierenden ersten Klebeverbindung 31 die Raumlage der beiden Bauteile 10, 20 zueinander fixiert, so dass die zweite Klebeverbindung 32 ungestört aushärten kann. Hierbei können ggf. die beiden Bauteile 10, 20 gemeinsam bewegt werden oder in sonstiger Art und Weise weiterverarbeitet werden, so dass eine entsprechende Zeitersparnis bei der Herstellung einer die beiden Bauteile 10, 20 aufweisenden Baugruppe 1 gewonnen wird.

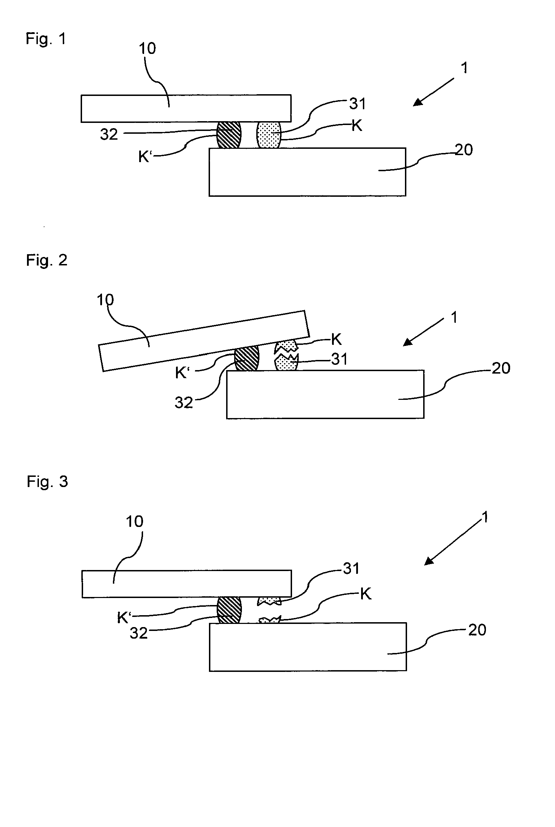

Nach Aushärten der zweiten Klebeverbindung 31 wird die erste Klebeverbindung 31 beabsichtigt so (z.B. dynamisch) belastet (vgl. Figur 2), dass sie zerstört wird und nunmehr die zweite Klebeverbindung 32 ungehindert von der ersten Klebeverbindung 31 elastisch verformbar ist (vgl. Figur 3). Eine derartige Belastung kann also bewusst bei der Herstellung der Baugruppe 1 (also insbesondere vor Auslieferung der Baugruppe 1) vorgenommen werden. Die Zerstörung der ersten Klebeverbindung 31 gemäß Figur 2 kann auch erst während oder nach der Inbetriebnahme bzw. während eines Betriebes der Baugruppe 1 auftreten, so dass die erste Klebeverbindung 31 erst zu diesem Zeitpunkt, d.h., während des bestimmungsgemäßen Betriebes der Baugruppe 1, versagt bzw. zerstört wird.

Bei dem ersten Klebstoff K handelt es sich gemäß einem Beispiel der Erfindung um einen Klebstoff K, der Cyanacrylat aufweist. Weiterhin handelt es sich bei dem zweiten Klebstoff K' gemäß einem Beispiel der Erfindung um einen Klebstoff K', der Polyurethan (PUR) aufweist.

### Bezugszeichen

| | |
|---|---|
| 1 | Baugruppe |
| 10 | Erstes Bauteil |
| 20 | Zweites Bauteil |
| 31 | Erste Klebeverbindung |
| 31 | Zweite Klebeverbindung |
| K | Erster Klebstoff |
| K' | Zweiter Klebstoff |

## Patentansprüche

1. Verfahren zum Verkleben eines ersten Bauteils (10) mit einem zweiten Bauteil (20), wobei die beiden Bauteile (10, 20) zum Vorfixieren mit einem ersten Klebstoff (K) unter Ausbildung einer ersten Klebeverbindung (31) verklebt werden, und wobei die beiden Bauteile (10, 20) zur Herstellung einer elastischen zweiten Klebeverbindung (32) mit einem zweiten Klebstoff (K') verklebt werden, und wobei die erste Klebeverbindung (31) nach dem Aushärten der zweiten Klebeverbindung (32) derart belastet wird, dass sie zerstört wird, so dass die zweite Klebeverbindung (32) ungehindert von der ersten Klebeverbindung (31) elastisch verformbar ist.

2. Verfahren nach Anspruch 1, **dadurch gekennzeichnet, dass** die Belastung chemisch, thermisch und/oder mechanisch ist.

3. Verfahren nach Anspruch 1 oder 2, **dadurch gekennzeichnet, dass** die beiden Klebstoffe (K, K') so gewählt werden, dass die erste Klebeverbindung (31) eine kürzere Aushärtezeit aufweist, als die zweite Klebeverbindung (32).

4. Verfahren nach einem der vorhergehenden Ansprüche, **dadurch gekennzeichnet, dass** die erste Klebeverbindung (31) eine geringere Festigkeit aufweist als die zweite Klebeverbindung (32).

5. Verfahren nach einem der vorhergehenden Ansprüche, **dadurch gekennzeichnet, dass** der erste Klebstoff (K) Cyanacrylat aufweist.

6. Verfahren nach einem der vorhergehenden Ansprüche, **dadurch gekennzeichnet, dass** der zweite Klebstoff (K') PUR aufweist.

7. Verfahren nach einem der vorhergehenden Ansprüche, **dadurch gekennzeichnet, dass** die erste Klebeverbindung (31) eine Aushärtezeit im Bereich von 1 Sekunde bis drei Stunden aufweist.

8. Verfahren nach einem der vorhergehenden Ansprüche, **dadurch gekennzeichnet, dass** die zweite Klebeverbindung (32) eine Aushärtezeit im Bereich von 3 Stunden bis 7 Tagen aufweist.

9. Verfahren nach einem der vorhergehenden Ansprüche, **dadurch gekennzeichnet, dass** die zweite Klebeverbindung (32) im ausgehärteten Zustand oder im Betriebszustand einen niedrigeren Elastizitätsmodul aufweist als die erste Klebeverbindung im ausgehärteten Zustand oder im Betriebszustand, wobei vorzugsweise der Elastizitätsmodul der zweiten Klebeverbindung kleiner ist als 1000MPa, insbesondere kleiner als 100MPa, insbesondere kleiner als 15MPa

10. Verfahren nach einem der vorhergehenden Ansprüche, **dadurch gekennzeichnet, dass** das erste Bauteil (10) eines der folgenden Bauteile ist: ein Schwingungsdämpfer, eine Komponente eines Schwingungsdämpfers, eine Montagehilfe, ein Wärmeübertrager, eine Komponente eines Wärmeübertragers, ein Fahrzeug, insbesondere Kraftfahrzeug, eine Komponente eines Fahrzeuges, insbesondere eines Kraftfahrzeuges, ein Flugzeug, eine Komponente eines Flugzeugs.

11. Verfahren nach einem der vorhergehenden Ansprüche, **dadurch gekennzeichnet, dass** das zweite Bauteil (20) eines der folgenden Bauteile ist: ein Schwingungsdämpfer, eine Komponente eines Schwingungsdämpfers, eine Montagehilfe, ein Wärmeübertrager, eine Komponente eines Wärmeübertragers, ein Fahrzeug, insbesondere Kraftfahrzeug, eine Komponente eines Fahrzeuges, insbesondere eines Kraftfahrzeuges, ein Flugzeug, eine Komponente eines Flugzeugs.

12. Baugruppe (1), aufweisend zumindest ein erstes Bauteil (10) sowie ein zweites Bauteil (20), wobei die beiden Bauteile mittels eines Verfahrens nach einem der vorhergehenden Ansprüche miteinander verbunden sind.

13. Baugruppe nach Anspruch 12, **dadurch gekennzeichnet, dass** das erste Bauteil (10) eines der folgenden Bauteile ist: ein Schwingungsdämpfer, eine Komponente eines Schwingungsdämpfers, eine Montagehilfe, ein Wärmeübertrager, eine Komponente eines Wärmeübertragers, ein Fahrzeug, insbesondere Kraftfahrzeug, eine Komponente eines Fahrzeuges, insbesondere eines Kraftfahrzeuges, ein Flugzeug, eine Komponente eines Flugzeugs.

14. Baugruppe nach Anspruch 12 oder 13, **dadurch gekennzeichnet, dass** das zweite Bauteil (20) eines der folgenden Bauteile ist: ein Schwingungsdämpfer, eine Komponente eines Schwingungsdämpfers, eine Montagehilfe, ein Wärmeübertrager, eine Komponente eines Wärmeübertragers, ein Fahrzeug, insbesondere Kraftfahrzeug, eine Komponente eines Fahrzeuges, insbesondere eines Kraftfahrzeuges, ein Flugzeug, eine Komponente eines Flugzeugs.
